# EUROPEAN PATENT APPLICATION

(11) **EP 2 671 761 A1**
(43) Date of publication of application: **11.12.2013**
(21) Application number: 11824291.6
(22) Date of filing: 31.01.2011
(51) Int. Cl.: B60R 16/04, B60R 16/033

(54) **POWER SUPPLY MANAGEMENT DEVICE**

(71) Applicant: Toyota Jidosha Kabushiki Kaisha, Toyota-shi, Aichi 471-8571 (JP)
(72) Inventor: OMIYA, Yuji, Toyota-shi Aichi 471-8571 (JP); NIWA, Hisao, Toyota-shi Aichi 471-8571 (JP)
(74) Representative: Intès, Didier Gérard André
(86) International application number: PCT/JP2011/051892
(87) International publication number: WO 2012/104957

(57) **Abstract**

There is provided a power supply control device 10 which can determine a deterioration state of a sub-battery 30 appropriately and determine permission/prohibition of running of a vehicle based on the result of deterioration determination. The power supply control device 10 has a first power supply 16, a second power supply 30 composed of a secondary battery, a DC/DC converter 14 which converts a voltage of the first power supply 16 and enables the second power supply 30 to be charged with the converted output voltage, and a controller 31 which controls the DC/DC converter 14 and determines deterioration of the second power supply 30. The controller 31 controls the DC/DC converter 14 during a charge period so that the output voltage value of the DC/DC converter 14 is greater than or equal to a predetermined voltage value, to thereby charge the second power supply 30, controls the DC/DC converter during a predetermined discharge period after the charge period so that the output voltage value of the DC/DC converter 14 is less than the predetermined voltage value, to thereby discharge the second power supply 30, and determines deterioration of the second power supply 30 according to a state of charge of the second power supply 30 after the discharge period.

## Description

### Technical Field

The present invention relates to a power supply control device.

### Background Art

A so-called hybrid vehicle driven by an internal combustion engine and a rotating electrical machine has a battery as a power supply. The battery supplies power to the rotating electrical machine and a controller which controls the vehicle, as well as to so-called auxiliaries such as audio equipment and power windows.

The rated voltages of the controller and the auxiliaries are set to be lower than the output voltage (terminal voltage) of the battery. Therefore, in order to convert the output voltage of the battery down to the rated voltages of the controller and the auxiliaries, a DC/DC converter battery is provided between the battery, and the controller and the auxiliaries.

The DC/DC converter is controlled by the above-described controller. Because the battery supplies power to the controller via the DC/DC converter, power supply from the battery to the controller is stopped during a period in which the DC/DC converter does not operate. In this state, the DC/DC converter cannot be started. Therefore, in addition to the above-described battery, the vehicle is provided with a battery which is able to be connected to the controller and the auxiliaries without the DC/DC converter and supply power to the controller and the auxiliaries even during a period in which the DC/DC converter does not operate. The battery which supplies power to the controller, etc. via the DC /DC converter will be hereinafter referred to as a "main battery," while the battery which supplies power to the controller, etc. without the DC /DC converter will be referred to as a "sub-battery."

The sub-battery has a rated voltage which is greater than or equal to the rated voltages of the controller and the auxiliaries, and can supply power to the controller and the auxiliaries even during a period in which the DC/DC converter does not operate. The sub-battery further supplies power to start the DC/DC converter. In addition, during a period in which the DC/DC converter operates and a voltage value which is stepped down by the DC/DC converter is greater than or equal to an output voltage value (terminal voltage value) of the sub-battery, the main battery supplies power to the sub-battery via the DC/DC converter, thereby charging the sub-battery.

Here, if the sub-battery continues to be discharged for a long period and the output voltage of the sub-battery drops below the rated voltages of the controller and the auxiliaries, in other words, if the running out of the sub-battery occurs, the controller is not supplied with sufficient power during the period in which the DC/DC converter stops, and as a result, the DC/DC converter cannot be started. Therefore, there have been proposed methods for starting the DC/DC converter when this running out of the sub-battery occurs.

For example, in Patent Literature 1, an assist motor employed in a power steering system is used as a generator. That is, when the driver rotates the steering wheel, the assist motor for assisting the steering by the driver generates electric power, and this power is supplied to the controller. Further, in Patent Literature 2 and Patent Literature 3, as shown in FIG. 11, in addition to a main battery and a sub-battery, an emergency battery 100 is mounted on the vehicle, and when the sub-battery 300 has run out, the emergency battery 100 supplies power to the controller 130.

### Citation List

### Patent Literature

Patent Literature 1: JP 2006-281822 A
Patent Literature 2: JP 2006-50779 A
Patent Literature 3: JP 2006-254565 A

### Summary of Invention

### Technical Problem

In addition to supplying power to the controller and the auxiliaries when the DC/DC. converter stops, the sub-battery may also supply power to the controller and the auxiliaries when the DC/DC converter operates. In particular, when the amount of power supplied to the auxiliaries increases, power is supplied from the sub-battery to the auxiliaries so as to support the DC/DC converter. For example, when the amount of operation of the power window increases, the amount of power supplied to the motor for moving the door glass up and down increases. During this time, in addition to the power supplied from the main battery to the auxiliaries via the DC/DC converter, power from the sub-battery is also supplied to the auxiliaries.

If the DC/DC converter is activated using an emergency battery after the sub-battery has run out, the charge state of the sub-battery which has run out and thus has a voltage below the rated voltages of the controller and the auxiliaries, may be restored when the sub-battery is supplied with power from the main battery, or may not be restored even if power is supplied from the main battery, and the sub-battery comes to the end of its life. Although in the former case the sub-battery can support power supply by the DC/DC converter, in the latter case the charge state is not restored, and therefore, the sub-battery is not able to support power supply. As a result, in the latter case, power supply to the auxiliaries is insufficient, and there is a risk, for example, that the door glass is moved up and down slowly and desired operation cannot be obtained.

As such, the purpose of the present invention is providing a power supply control device which can determine a deterioration state of the sub-battery appropriately and determine permission/prohibition of running of a vehicle according to the deterioration state of the sub-battery.

### Solution to Problem

The present invention relates to a power supply control device mounted on a vehicle. The power supply control device has a first power supply, a second power supply composed of a secondary battery, a DC/DC converter which converts a voltage of the first power supply and enables the second power supply to be charged with the converted output voltage, and a controller which controls the DC/DC converter and determines deterioration of the second power supply. The controller controls the DC/DC converter during a charge period so that an output voltage value of the DC/DC converter is greater than or equal to a predetermined voltage value, to thereby charge the second power supply. The controller also controls the DC/DC converter during a predetermined discharge period after the charge period so that the output voltage value of the DC/DC converter is less than the predetermined voltage value, to thereby discharge the second power supply, and determines deterioration of the second power supply according to a state of charge of the second power supply after the discharge period.

The present invention further relates to a power supply control device mounted on a vehicle. The power supply control device has a first power supply, a second power supply composed of a secondary battery, a DC/DC converter which converts a voltage of the first power supply and enables the second power supply to be charged with the converted output voltage, and a controller which controls the DC/DC converter and determines deterioration of the second power supply. The controller controls the DC/DC converter during a charge period so that an output voltage value of the DC/DC converter is greater than or equal to a first voltage value, to thereby charge the second power supply. The controller also controls the DC/DC converter during a predetermined discharge period after the charge period so that the output voltage value of the DC/DC converter is a second voltage value which is less than the first voltage value, to thereby discharge the second power supply, and determines deterioration of the second power supply according to a time period in which the voltage value of the second power supply decreases to a third voltage value which is less than the first voltage value and greater than or equal to the second voltage value.

In the present invention, there are preferably provided an emergency power supply, and an emergency switch which enables power supply from the emergency power supply to the controller. In this case, the controller determines deterioration of the second power supply when the emergency switch is in an on state.

Further, in the present invention, the controller preferably controls the DC/DC converter to charge the second power supply when the emergency switch is in the on state.

The present invention also relates to a vehicle in which the power supply control device is mounted. When it is determined, as a result of the deterioration determination of the second power supply, that the second power supply has not reached the end of its battery life in this vehicle, the controller permits the vehicle to run.

### Advantageous Effects of Invention

With the present invention, it is possible to determine a deterioration state of a sub-battery appropriately and determine permission or prohibition of running of a vehicle according to the deterioration state of the sub-battery.

### Brief Description of Drawings

[FIG. 1] FIG. 1 shows an example of a power supply control device according to an embodiment and its peripheral devices.
[FIG. 2] FIG. 2 shows an example of charge and discharge characteristics of the sub-battery.
[FIG. 3] FIG. 3 shows an example of charge and discharge cycle characteristics of the sub-battery.
[FIG. 4] FIG. 4 shows discharge characteristics of the sub-battery by the number of charge and discharge cycles.
[FIG. 5] FIG. 5 shows an example of a flow diagram for determining permission/prohibition of running of a vehicle according to an embodiment.
[FIG. 6] FIG. 6 shows an example of a change of a voltage of the sub-battery.
[FIG. 7] FIG. 7 shows an example of a change of a voltage of the sub-battery.
[FIG. 8] FIG. 8 shows an example of a flow diagram for determining permission/prohibition of running of a vehicle according to an embodiment.
[FIG. 9] FIG. 9 shows an example of a change of a voltage of the sub-battery.
[FIG. 10] FIG. 10 shows an example of a power supply control device according to another embodiment and its peripheral devices.

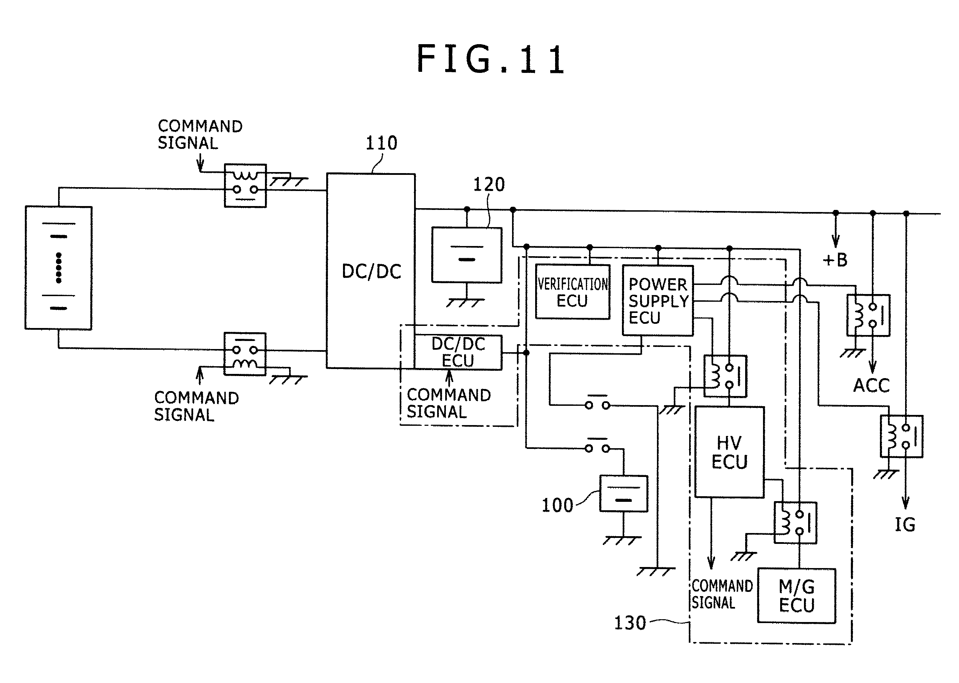

[FIG. 11] FIG. 1 shows an example of a power supply control device according to the related art.

### Description of Embodiments

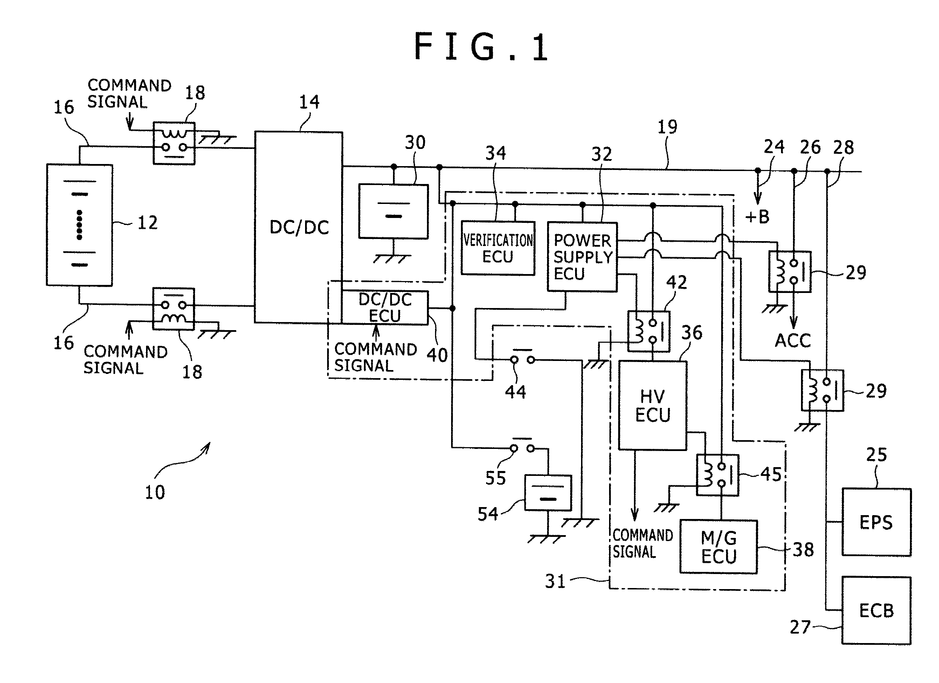

FIG. 1 shows the power supply control device according to the present embodiment and its peripheral devices. A power supply control device 10 is mounted on a vehicle (not shown). The vehicle is the so-called hybrid vehicle which preferably has an internal combustion engine and a rotating electrical machine as drive sources.

The power supply control device 10 is composed of a main battery 12, a DC/DC converter 14, a sub-battery 30, and a controller 31. The main battery 12 is preferably provided as a secondary battery and is fixed in a predetermined installation position in a vehicle. The main battery 12 is provided as a high voltage power supply having, for example, a terminal voltage of approximately 200 V, and is configured as a laminate in which a plurality of cells of, for example, nickel hydrogen batteries or lithium ion batteries are stacked. The main battery 12 supplies power to the rotating electrical machine via a step up converter or an inverter (not shown), and supplies power to the controller 31 (described later) and the auxiliaries via the DC/DC converter 14.

The DC/DC converter 14 is composed of an insulation convertor, and is specifically composed of, for example, a full bridge converter or a half bridge converter. The DC/DC converter 14 steps down or steps up an output voltage of the main battery 12 by an on/off operation of a built-in switching element, thereby outputting the result.

The DC/DC converter 14 is connected to the main battery 12 via a high-voltage cable 16. The high-voltage cable 16 is provided with a system main relay 18. The system main relay 18 is composed of a coil, and a switch for performing the on-off operation using a magnetic field generated in the coil. By causing a current to flow in the coil, the switch operates, thereby electrically connecting or disconnecting between the main battery 12 and the DC/DC converter 14.

In addition, the DC/DC converter 14 is connected to the sub-battery 30 (described later), the controller 31, and the auxiliaries by way of low-voltage cable 19. The output power from the DC/DC converter 14 is supplied to these devices via the low-voltage cable 19.

For example, power is supplied, via the low-voltage cable 19 and an always-on power supply cable 24, to devices such as a memory of the controller 31 and a clock installed in the vehicle which require power supply regardless of whether the vehicle is driven or stopped. Further, power is supplied, via the low-voltage cable 19 and an accessory cable 26, to electrical devices such as audio equipment which are used in the so-called accessory position. Furthermore, power is supplied, via the low-voltage cable 19 and an ignition cable 28, to electrical devices such as a power window system 25. These electrical devices connected to the always-power supply cable 24, the accessory cable 26, and the ignition cable 28 are collectively referred to as auxiliaries.

In addition, the accessory cable 26 and the ignition cable 28 are provided with relays 29. The relays 29 receive a command signal (command current) from a power supply ECU 32 (described later). In response to this connection signal, the relays 29 disconnect or connect the accessory cable 26 and the ignition cable 28.

The sub-battery 30 is provided as an installable secondary battery and is fixed in a predetermined installation position in the vehicle. The sub-battery 30 is also provided as a lead acid battery having a rated voltage of, for example, 12.5 to 13.0 V. The sub-battery 30 is connected to the controller 31 and the auxiliaries without the DC/DC converter 14 and the system main relay 18. Therefore, it is possible to supply power from the sub-battery 30 to the controller 31 at least in one of a period in which the DC/DC converter 14 does not operate and a period in which the system main relay 18 is disconnected; that is, a period in which there is no power supply from the main battery 12 to the control ler 31.

In addition, when the DC/DC converter 14 operates and the system main relay 18 is connected, and when an output voltage value of the DC/DC converter 14 is greater than or equal to an output voltage value (terminal voltage value) of the sub-battery 30, the main battery 12 charges the sub-battery 30 via the DC/DC converter 14.

Further, even if the DC/DC converter 14 operates, if an output voltage of the DC/DC converter 14 is less than that of the sub-battery 30, the sub-battery 30 is in the discharge state, and power is supplied to the controller 31 and the auxiliaries. For example, when the amount of a current supplied to the controller 31 and the auxiliaries such as a power window system increases, and the output voltage of the DC/DC converter 14 is reduced to be less than the output voltage value of the sub-battery 30, the sub-battery 30 also supplies power to the auxiliaries and the controller 31. In other words, the sub-battery 30 functions to support the DC/DC converter 14 when power consumption of the controller 31 and the auxiliaries increases.

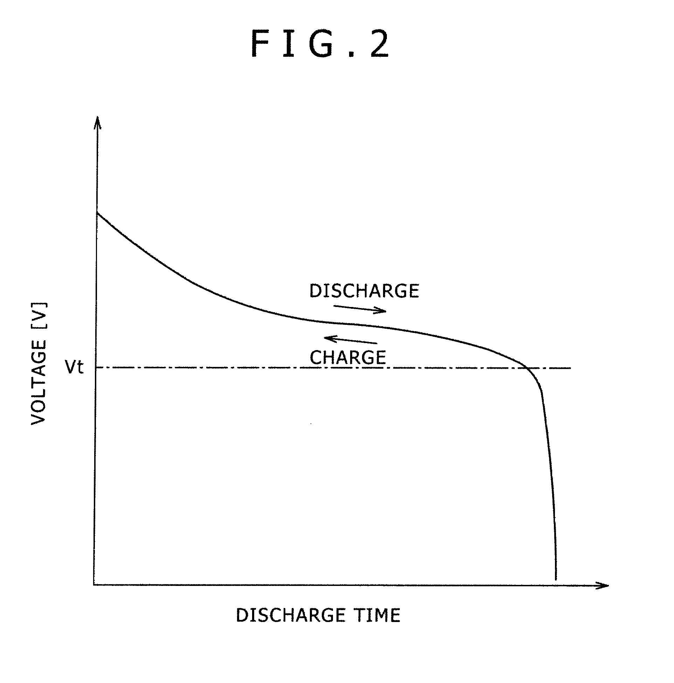

The discharge characteristics of the sub-battery 30 will be described here with reference to FIG. 2. In a secondary battery such as the sub-battery 30, the state of charge (SOC) decreases as the discharge time increases. As the state of charge (SOC) decreases, the positive electrode of the sub-battery 30 becomes covered with a deposit, and an internal resistance increases. The output voltage value (terminal voltage value) Vb of the sub-battery 30 during the discharge time can be expressed as Vb = E - Id * r, where E [V] is the electromotive force of the sub-battery 30, Id [A] is a discharge current of the sub-battery 30, and r [Ω] is an internal resistance of the sub-battery 30. As is clear from this equation, as the internal resistance r increases, the output voltage Vb decreases gradually from the rated voltage value and drops below the rated voltage value Vt of the controller 31 and the auxiliaries. This is the so-called running out of the sub-battery. In this state, it is not possible to supply sufficient power from the sub-battery 30 to the controller 31 and the auxiliaries. In such a case, by charging the sub-battery 30 using the main battery 12, it is possible to melt the deposit covering the positive electrode and reduce the internal resistance r, to thereby restore the voltage value Vb and restore the state of charge (SOC) of the sub-battery 30.

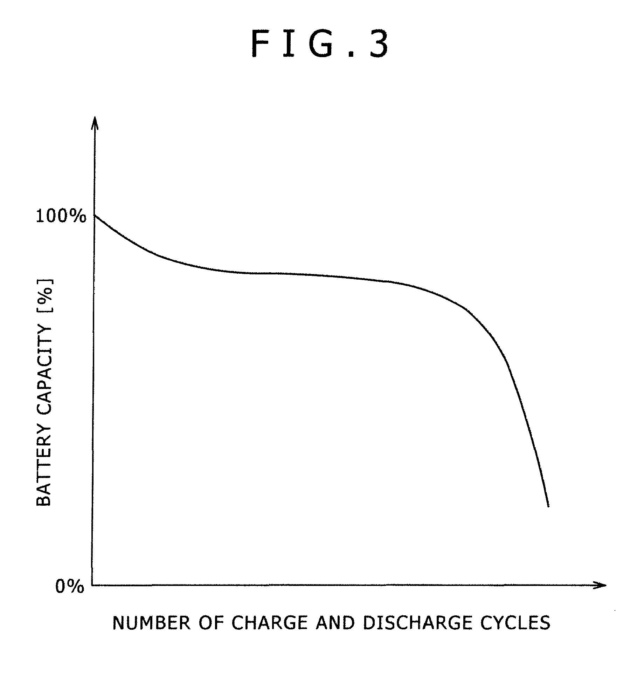

However, as this cycle of charge and discharge is repeated, the deposit on the positive electrode is gradually crystallized and is not easily melted even by charging the sub-battery 30. As a result, the voltage value Vb does not recover to the rated voltage, and the recovery rate of the state of charge (SOC) declines. FIG. 3 shows an example of a change of a battery capacity at a fully charged state with the increase of the number of cycles. One cycle means performing one charge and one discharge. As is clear from FIG. 3, although the state of charge (SOC) is restored to almost 100% by charging the battery while the number of cycles is small, as the number of cycles increases, the state of charge decreases and the recovery rate of the state of charge (SOC) decreases.

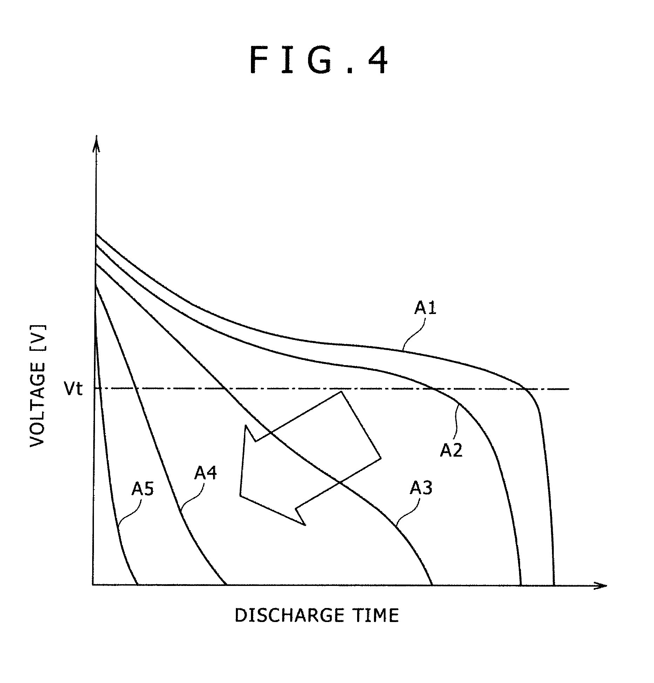

As the recovery rate of the state of charge continues to decrease, the fall of the output voltage Vb (discharge voltage) of the sub-battery 30 which is in the fully charged state becomes steep. FIG. 4 shows a downward curve of the output voltage Vb with increase of the number of cycles. A curve A 1 shows a downward curve of a voltage of the sub-battery 30 which is obtained when the number of cycles is one. Thereafter, as the number of cycles increases, the fall of the voltage becomes steeper from a curve A2 to a curve A5, and the dischargeable time becomes shorter. In other words, the output voltage falls below the rated voltage value Vt of the controller 31 and the auxiliaries in a short time from the start of discharge. Further, as the number of cycles increases, the output voltage Vb at the fully charged state decreases. With such a sub-battery 30, the output voltage soon falls below the rated voltage value Vt of the controller 31 and the auxiliaries even if the battery is charged. The sub-battery 30 therefore cannot function appropriately as an auxiliary power source.

The controller 31 is composed of various electronic control units (ECU) for controlling the vehicle. Specifically, the controller 31 is composed of a power supply ECU 32, a verification ECU 34, HV-ECU 36, MG-ECU 38, and a DC/DC-ECU 40. All these electronic control units are computers having a CPU, a memory, etc. A rated voltage of the electronic control unit has a range and has a lowest value and a highest value. For example, the rated voltage is set between 10.0 V to 15.0 V. Further, although FIG. 1 shows each ECU of the controller 31 separately according to its function, these ECUs may also be provided collectively in a single computer.

The verification ECU 34 receives an identification ID transmitted from a smart key (registered trademark) (not shown) of the vehicle and verifies whether or not that identification ID matches a registered ID which is stored in advance. The verification result is sent to the power supply ECU 32.

The power supply ECU 32 controls a power supply system in the vehicle. That is, the power supply ECU 32 controls the state of disconnection/connection of the relays 29 of the accessory cable 26 and the ignition cable 28, thereby controlling power supply to the auxiliaries connected to these cables. The power supply ECU 32 also controls the state of disconnection/connection of an HV relay 42 provided on the upstream side of the HV-ECU 36, thereby controlling activation and stop of the HV-ECU 36. The power supply ECU 32 also sends and receives a control signal to/from the verification ECU 34, a start switch 44 provided near the driver's seat of the vehicle, a shift position sensor, and a stop lamp switch (not shown in the figure), and determines whether or not it is possible to supply power to the auxiliaries connected to the HV-ECU 36, the accessory cable 26, or the ignition cable 28 according to the operational state of these devices.

When the power supply ECU 32 receives, from the verification ECU 34, the verification result indicating that the identification ID matches the registered ID, it switches the HV relay 42 from the disconnected state to the connected state according to the state of operational positions of the start switch 44, a shift position sensor, and a stop lamp switch (not shown), to thereby supply power to the HV-ECU 36. The power supply ECU 32 further switches the relays 29 from the disconnected state to the connected state, to thereby supply power to the auxiliaries connected to the accessory cable 26 and the ignition cable 28. Meanwhile, when the power supply ECU 32 receives, from the verification ECU 34, the verification result indicating that the identification ID does not match the registered ID, the power supply ECU 32 maintains the HV relay 42 and the relays 29 in the disconnected state and does not supply power to the HV-ECU 36 and the auxiliaries.

The HV-ECU 36 is an electronic control unit for a hybrid vehicle and sends a drive command to the MG-ECU 38 and an engine ECU (not shown). Specifically, the HV-ECU 36 carries out control so as to calculate a required torque from, for example, the amount of pressing of an accelerator pedal of the vehicle, divide the required torque into a required output for the internal combustion engine and a required output for the rotating electrical machine, and send the required outputs to the MG-ECU 38 and the engine ECU, respectively. The HV-ECU 36 also controls operation of the DC/DC-ECU 40 and a coil of the system main relay 18 by sending a command signal (command current) to them. The HV-ECU 38 also controls disconnection and connection of an MG relay 45 provided on the upstream side of the cable of the MG-ECU 38.

The MG-ECU 38 is a control unit for the rotating electrical machine. The MG-ECU 38 controls a step-up inverter or an inverter in accordance with the required output sent from the HV-ECU 36, steps up and transforms DC power of the main battery 12, and supplies the transformed output power to the rotating electrical machine. In addition, when the rotating electrical machine is operated as a generator using, for example, power of the internal combustion engine or a regeneration brake, the MG-ECU 38 controls the inverter to thereby convert AC power generated in the rotating electrical machine to DC power, and further controls the step-up converter to thereby step down the DC power. The stepped-down DC power is supplied to the main battery 12. In doing so, the main battery 12 is charged.

The DC/DC-ECU 40 performs constant voltage control by sending a command current to the DC/DC converter 14 to thereby control the on/off operation of the switching element included in the DC/DC converter 14 so that an output voltage of the DC/DC converter 14 becomes a voltage value as commanded by the HV-ECU 36. The DC/DC-ECU 40 measures an output voltage value (terminal voltage value) of the main battery 12 using a voltage sensor provided in the main battery 12. The DC/DC-ECU 40 receives, from the HV-ECU 36, a command signal indicating a target output voltage value, and calculates a voltage step-down ratio according to the measured output voltage value of the main battery 12 and the target output voltage value. The DC/DC-ECU 40 also sends a command current according to this voltage step-down rate to the switching element of the DC/DC converter 14, to thereby perform on/off control of the switching element.

In addition, an emergency power supply 54 is connected to the controller 31 via the low-voltage cable 19. The emergency power supply 54 is composed of a power supply having a rated output voltage equivalent to that of the sub-battery 30. The emergency power supply 54 is composed of, for example, a first battery having a smaller capacity than the sub-battery 30. Further, an emergency switch 55 is provided between the controller 31 and the emergency power supply 54. Like, for example, the start switch 44, the emergency switch 55 is provided near the driver seat.

By turning on the emergency switch 55, the controller 31 is electrically connected to the emergency power supply 54. With such a configuration, it is possible to supply power from the emergency power supply 54 to the controller 31 by pressing the emergency switch 55 at least during one of a period in which the system main relay 18 is in the disconnected state and a period in which the DC/DC converter 14 does not operate, and further in a period when the output voltage (terminal voltage) of the sub-battery 30 is below the rated voltage value of the controller 31; that is, when both the main battery 12 and the sub-battery 30 cannot supply sufficient power to the controller 31.

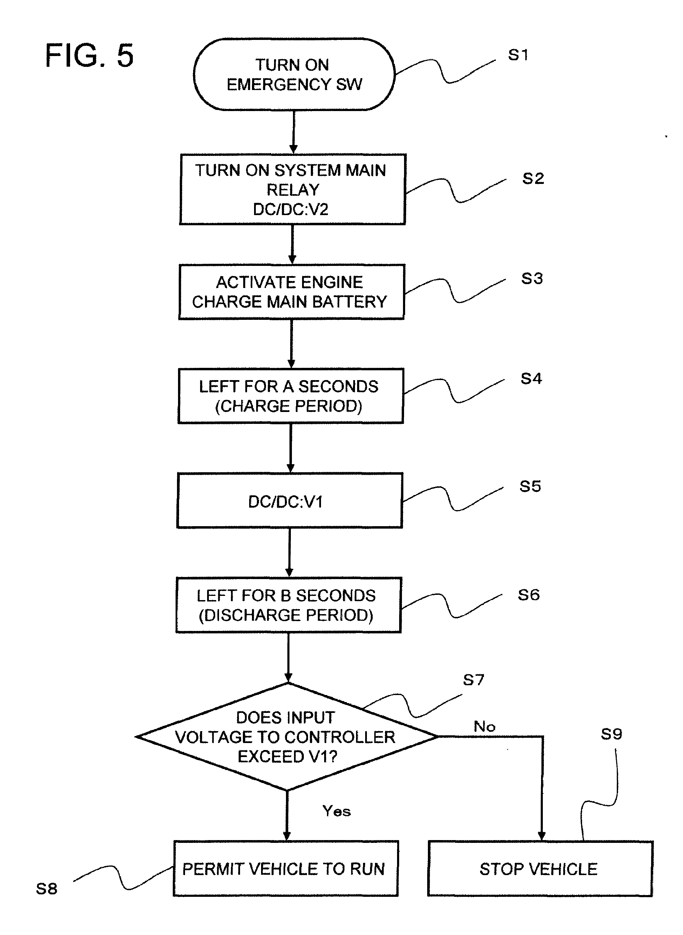

Then, a flow diagram of determining whether to permit/prohibit running of the vehicle when the sub-battery has run out will be described with reference to FIG. 5. In this flow diagram, after the emergency switch 55 comes in the on state and the emergency power supply 54 activates the controller 31, the controller 31 performs deterioration determination of the sub-battery 30; that is, determination as to whether or not the sub-battery 30 has come to the end of its life. In doing so, it is possible to determine whether or not the sub-battery 30 can support power supply by the DC/DC converter 14 when the amount of power supply to the auxiliaries increases. Further, in this flow diagram, whether to permit or prohibit running of the vehicle is determined according to the deterioration determination of the sub-battery 30. As such, it is possible to prevent the vehicle from being driven when there is a risk of insufficient power supply to the auxiliaries, etc.

In the first step S 1 in this flow diagram, it is assumed that the vehicle is in the stop state, the system main relay 18 is in the disconnected state, and the DC/DC converter 14 is stopped. Further, the lowest value of the rated voltages of the controller 31 and the auxiliaries will hereinafter be referred to as V1. In addition, the rated voltage value of the sub-battery 30 is referred to as V2. The magnitude relationship between them is expressed as V 1 < V2. For example, it is assumed that V1 is 10 V, while V2 is between 12.5 V and 13.0 V.

When the sub-battery runs out; that is, when the output voltage (terminal voltage) of the sub-battery 30 is below the rated voltage V1 of the controller 31, etc., the vehicle is not activated even if the driver inserts the smart key into the key slot of the driver seat and presses the start switch 44. In such a case, by the driver's pressing of the emergency switch 55 (S1), the emergency power supply 54 is conducted to the power supply ECU 32, the verification ECU 34, and the DC/DC-ECU 40, and power is supplied from the emergency power supply 54 to these ECUs. The verification ECU 34 reports to the power supply ECU 32 that an identification ID of the smart key matches a registered ID which is stored in advance. The power supply ECU 32 causes the HV relay 42 to be in the connected state and causes it to supply power to the HV-ECU 36 supplied from the emergency power supply 54. The HV-ECU 36, which is supplied with power and is activated, sends a command current to the coil of the system main relay 18 and causes the system main relay 18 to be in the connected state.

Further, the DC/DC-ECU 40 controls the switching element of the DC/DC converter so that an output voltage of the DC/DC converter 14 becomes a rated voltage value V2 of the sub-battery 30 (S2). By the operation in (S 1) and (S2), power is supplied from the main battery 12 to the sub-battery 30, the controller 31, and the auxiliaries via the DC/DC converter 14, and the sub-battery 30 is charged. In addition to setting the rated voltage value V2 of the sub-battery 30 as a set value for the output voltage value of the DC/DC converter 14 in step 2, a voltage value which is greater than or equal to the rated voltage value V2 and smaller than or equal to a predetermined upper limit value may also be set as the set value, in order to avoid overcharge of the sub-battery 30.

Further, the HV-ECU 36 activates the internal combustion engine, and the driving force of the internal combustion engine drives the rotating electrical machine to generate power. The generated power is supplied to the main battery 12, thereby charging the main battery 12 (S3).

The DC/DC-ECU 40 further provides a charge period in which the output voltage of the DC/DC converter 14 is fixed as the rated voltage value V2 of the sub-battery 30, to thereby charge the sub-battery 30 (S4). This charge period is determined according to, for example, charging characteristics of the sub-battery 30, and is set to be a time period which is sufficient to restore the state of charge of the sub-battery 30. For example, a charge period is set as a period in which the output voltage value of the sub-battery 30, which reaches a discharge end voltage, recovers to a predetermined voltage value which is higher than the rated voltage V1 of the controller 31 (for example, a value which is greater than V1 by 1 V) at the first charge (that is, the first round of a charge and discharge cycle). The charge period is, for example, between 60 seconds and 90 seconds. Alternatively, instead of setting such a charge period, a charge period can be ended when the voltage value of the sub-battery 30 recovers to the predetermined voltage value.

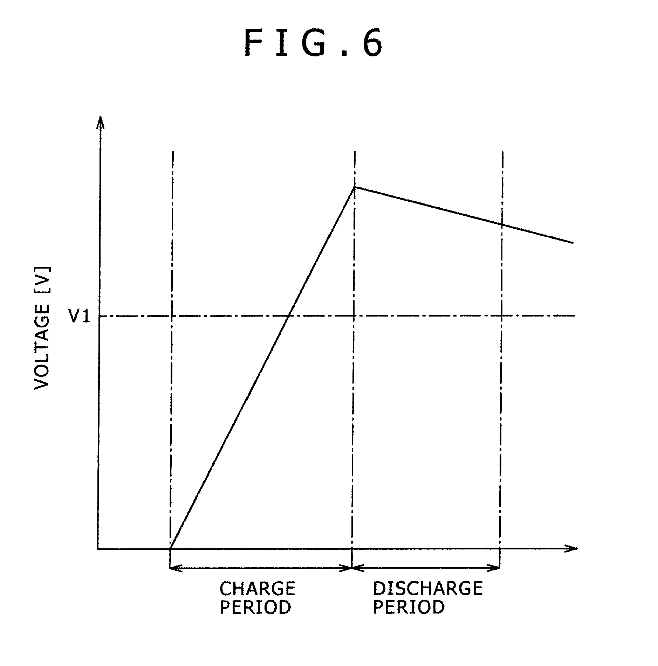

The DC/DC-ECU 40 then reduces the output voltage value of the DC/DC converter 14 to a predetermined value which is smaller than the rated voltage value V2 of the sub-battery 30 (S5). In FIG. 6, the output voltage value is reduced to the lowest value V1 of the rated voltage of the controller 31. At this time, because the terminal voltage (discharge voltage) of the sub-battery 30 is higher than output voltage V1 of the DC/DC converter 14, it is the sub-battery 30 which mainly supplies power to the controller 31 and the auxiliaries. Further, the DC/DC-ECU 40 provides a discharge period in which V1 is fixed as the output voltage value of the DC/DC converter 14, to thereby discharge the sub-battery 30 (S6). This discharge period is determined according to, for example, discharge characteristics of the sub-battery 30, and is set to be a time period which is sufficient to detect deterioration of the sub-battery 30. For example, a discharge period may also be provided by obtaining in advance a time period in which an output voltage value of the sub-battery 30, which reaches the end of its battery life, decreases from a value obtained in the fully charged state to V1, and by setting this time period as the discharge period. To reach the end of the battery life means, for example, that a dischargeable time of the sub-battery 30 decreases to half that of the first use. The discharge period is, for example, between 60 seconds and 90 seconds.

After the discharge period has elapsed, the power supply ECU 32 detects an input voltage value applied to the power supply ECU 32 using, for example, a built-in voltage sensor (S7). If the sub-battery is not deteriorated to a degree that it reaches the end of its battery life, the voltage drop of the sub-battery 30 is gentle as shown in FIG. 6, and a voltage value which is higher than the output voltage value V 1 of the DC/DC converter 14 is maintained even if the discharge period has elapsed. In this case, because the power supply ECU 32 is supplied with power mainly from the sub-battery 30, an input power voltage value applied to the supply ECU 32 exceeds the output voltage value V1 of the DC/DC converter 14. In this case, the power supply ECU 32 determines that the state of the sub-battery 30 is good; that is, the sub-battery 30 has not reached the end of its battery life, and sends a command to the HV-ECU 36 to permit the vehicle to be driven (S8). In response to this, the HV-ECU 36 sends a required output value based on, for example, the amount of pressing of the accelerator pedal of the vehicle, to the MG-ECU 38 and the engine ECU (not shown).

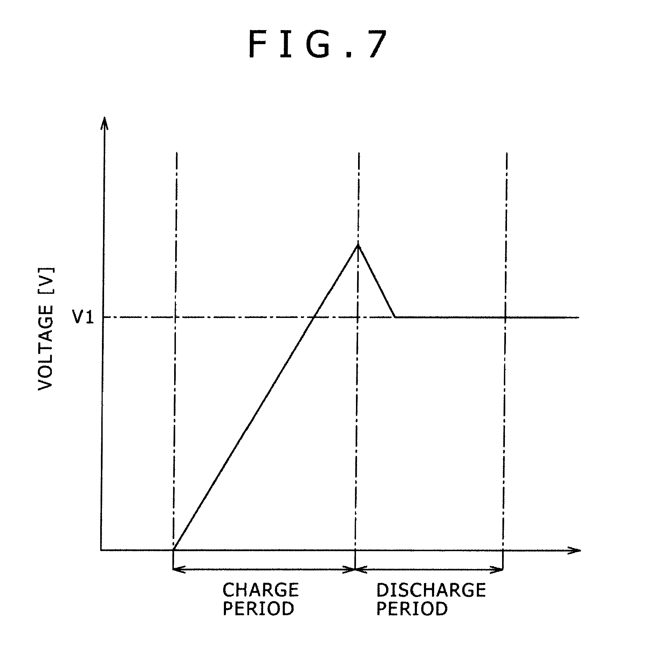

Meanwhile, if the sub-battery 30 is deteriorated to a degree that it reaches the end of its battery life, the voltage of the sub-battery 30 quickly drops to the output voltage value V1 of the DC/DC converter 14 within the discharge period, as shown in FIG. 7. In this case, because the power supply ECU 32 is supplied with power mainly from the main battery 12 via the DC/DC converter 14, the output voltage value V 1 of the DC/DC converter 14 is provided as an input voltage value to power supply ECU 32. In this case, the power supply ECU 32 determines that the sub-battery 30 has reached the end of its battery life, and after providing an announcement to urge the driver to replace the sub-battery 30 in the form of voice or display on the display, switches the HV relay 42 into the disconnected state, to thereby block power supply to the HV-ECU 36. In doing so, the vehicle does not shift to the running state (S9).

As such, in the present embodiment, when the emergency switch 55 is pressed down, and when the controller 31 performs deterioration determination of the sub-battery 30 and determines that the sub-battery 30 has not reached the end of its battery life, the vehicle is permitted to run. Therefore, when power consumption in, for example, the auxiliaries increases while the vehicle runs, the sub-battery 30 can support power supply by the DC/DC converter 14, and the auxiliaries are supplied with sufficient power.

Although, in the control flow shown in FIG. 5, the output voltage value of the DC/DC converter 14 during the discharge period is set to be the lowest value V 1 of the rated voltage of the controller 31, the output voltage value is not limited to this example. The output voltage value may also be set to be, for example, a value less than the rated voltage value V1 of the controller 31. The output voltage value may also be, for example, () V by stopping the DC/DC converter 14. In this case, it is possible to determine whether or not the vehicle can be activated according to the operational state of the power supply ECU 32.

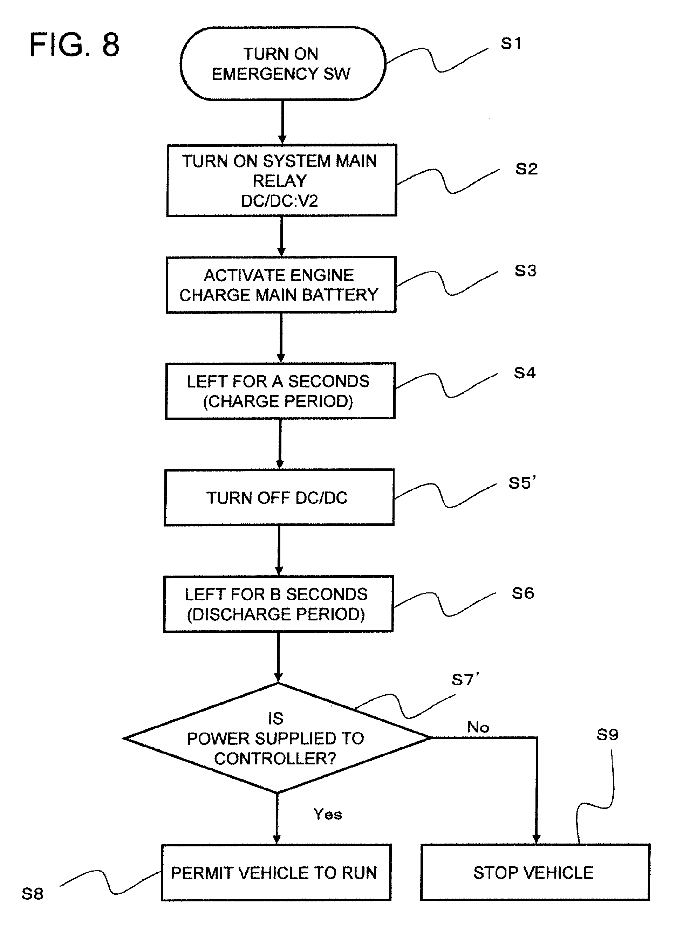

That is, as shown in FIG. 8, the operation of the DC/DC converter 14 is stopped during the discharge period (S5'). In doing so, power supply from the main battery 12 is cut off. Further, as described above, the emergency switch 55 is switched to the off position in S2. Therefore, only the sub-battery 30 can supply power to the controller 31 and the auxiliaries during this discharge period.

If the sub-battery 30 does not reach the end of its battery life, power continues to be supplied to the controller 31 and the auxiliaries after the discharge period has elapsed. The power supply ECU 32 of the controller 31 determines that the state of the sub-battery 30 is good; that is, the sub-battery 30 has not reached the end of its battery life, when the power supply ECU 32 itself continues to operate after the elapse of the discharge period (S7'), and sends a command to the HV-ECU 36 to permit the vehicle to run (S8).

Meanwhile, if the sub-battery 30 reaches the end of its battery life, power supply to the controller 31 is stopped during the discharge period. This causes the controller 31 and other control systems in the vehicle to be stopped, and, as a result, the vehicle is not permitted to run (S9). In the execution of the control flow shown in FIG. 8, it is impossible to report to the driver to change the sub-battery 30 once power supply is stopped, including when power supply to the sub-battery 31 is stopped during the discharge period. It is therefore preferable to report to the driver whether or not the sub-battery 30 is required to be changed in advance during the charge period in which the controller 31 is supplied with power. For example, in step S4 provided as the charge period, the display displays a message to replace the sub-battery 30, if the speed meter and the shift position or the car interior light are dark or go out after the charge period has elapsed.

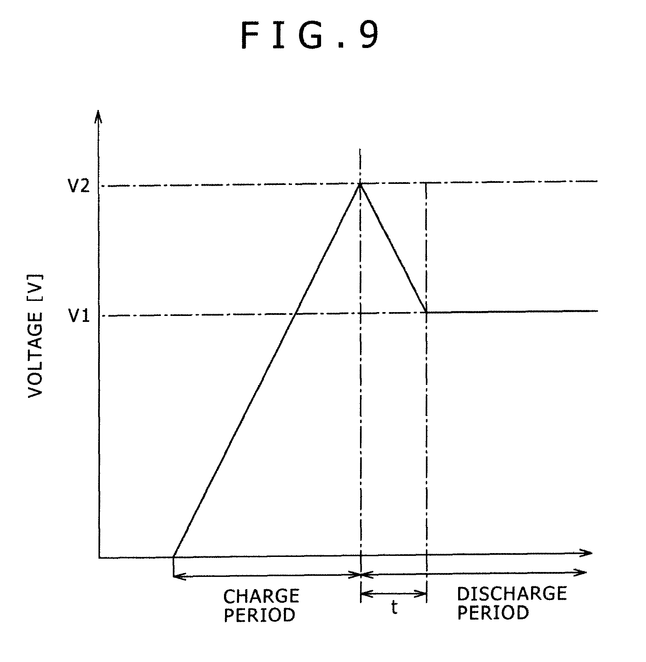

Although, in the control flows shown in FIGs. 5 and 8, a discharge period is set in advance and deterioration determination of the sub-battery 30 is performed based on the voltage value of the sub-battery 30 obtained after the discharge period has elapsed, determination of deterioration is not limited to this example. For example, as shown in FIG. 9, by charging the sub-battery 30 until a predetermined voltage value is obtained and then measuring a time period in which the input voltage of the power supply ECU 32 decreases to V1, it is possible to determine deterioration of the sub-battery 30 according to this measured time period. Further, by setting a voltage value V3 for determination use which is less than the output voltage value V2 of the DC/DC converter 14 in the charge period and is greater than or equal to the output voltage value V1 of the DC/DC converter 14 in the discharge period, and then measuring a time period in which the voltage value of the sub-battery 30 obtained after the charge period decreases to voltage value V3, it is also possible to determine deterioration of the sub-battery 30 according to this measured time period. In this case, if the voltage value decreases to the voltage value V1 or V3 earlier than a predetermined time, it is determined that the sub-battery 30 has reached the end of its battery life.

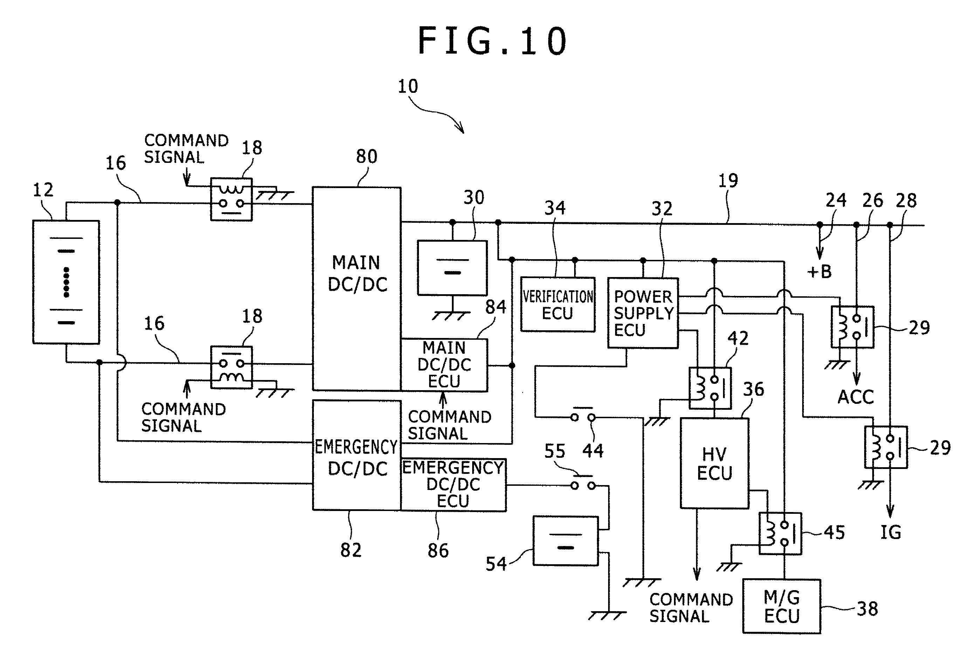

In addition, the power supply control device 10 described above is not limited to the configuration shown in FIG.1 and can have various configurations. It can also be connected to various peripheral circuits. For example, the power supply control device 10 can have a configuration shown in FIG. 10, instead of the configuration shown in FIG. 1. In FIG. 10, by providing two DC/DC converters and supplying power from the emergency power supply 54 to an ECU of only one of the DC/DC converters, the power load of the emergency power supply 54 is alleviated as compared to when it supplies power to the controller 31.

The power supply control device 10 has a main DC/DC converter 80 and an emergency DC/DC converter 82. The main DC/DC converter 80 and the emergency DC/DC converter 82 are connected to the main battery 12 in parallel. Further, the system main relay 18 is provided between the main battery 12 and the main DC/DC converter 80, while the emergency DC/DC converter 82 is connected to the main battery 12 without the system main relay 18. Further, a main DC/DC-ECU 84 which controls the main DC/DC converter 80 receives power from the sub-battery 30 or the main battery 12 via the low-voltage cable 19, while an emergency DC/DC-ECU 86 which controls the emergency DC/DC converter 82 is connected only to the emergency power supply 54.

For the power supply control device 10 shown in FIG. 10, a flow of starting the vehicle when the sub-battery has run out is basically similar to those shown in FIG. 5 and FIG. 8, except that the means for supplying power to the controller 31 differs from the embodiment shown in FIG. 1.

That is, by the driver's pressing of the emergency switch 55, power is supplied from the emergency power supply 54 to the emergency DC/DC-ECU 86. The emergency DC/DC-ECU 86 stores the rated voltages of the ECUs in advance, and the emergency DC/DC-ECU 86 steps down the voltage of the main battery 12 to the rated voltages of the ECUs. Further, power from the main battery 12 is supplied to the controller 31 via the emergency DC/DC converter 82 and the low-voltage cable 19.

Further, the power supply ECU 32 is activated by pressing the start switch 44, and the power supply ECU 32 causes the HV relay 42 to be in the connected state, thereby supplying power to the HV-ECU 36. The HV-ECU 36 supplies a command signal (current) to the coil of the system main relay 18, thereby switching the system main relay 18 from the disconnected state to the connected state. The main battery 12 is thus electrically conducted to the main DC/DC converter 80. The HV-ECU 36 also sends the output voltage value as a command signal to the main DC/DC-ECU 84. The main DC/DC-ECU 84 drives a switching element of the main DC/DC converter 80 according to the command signal. In doing so, the main battery 12 supplies power to the ECUs, the sub-battery 30, etc. via the system main relay 18 and the main DC/DC converter 80. Subsequently, the same control as shown in step S2 in FIG. 5 or FIG. 8 is carried out.

### Reference Symbols List

10 power supply control device, 12 main battery, 14 DC/DC converter, 16 high-voltage cable, 18 system main relay, 19 low-voltage cable, 24 always-on power supply cable 25 power steering system, 26 accessory cable, 27 electronically controlled brake system, 28 ignition cable, 29 relay, 30 sub-battery, 31 controller, 32 power supply ECU, 34 verification ECU, 36 HV-ECU, 38 M/G-ECU, 42 HV relay, 44 start switch, 45 M/G relay, 54 emergency power supply, 55 emergency switch, 80 main DC/DC converter, 82 emergency DC/DC converter, 84 main DC/DC-ECU, 86 emergency DC/DC-ECU.

## Claims

1. A power supply control device mounted on a vehicle, the device comprising:
a first power supply;
a second power supply composed of a secondary battery;
a DC/DC converter which converts a voltage of the first power supply and enables the second power supply to be charged with the converted output voltage; and
a controller which controls the DC/DC converter and determines deterioration of the second power supply,
wherein
the controller
controls the DC/DC converter during a charge period so that an output voltage value of the DC/DC converter is greater than or equal to a predetermined voltage value, to thereby charge the second power supply,
controls the DC/DC converter during a predetermined discharge period after the charge period so that the output voltage value of the DC/DC converter is less than the predetermined voltage value, to thereby discharge the second power supply, and
determines deterioration of the second power supply according to a state of charge of the second power supply after the discharge period.

2. A power supply control device mounted on a vehicle, the device comprising:
a first power supply;
a second power supply composed of a secondary battery;
a DC/DC converter which converts a voltage of the first power supply and enables the second power supply to be charged with the converted output voltage; and
a controller which controls the DC/DC converter and determines deterioration of the second power supply;
wherein
the controller
controls the DC/DC converter during a charge period so that the output voltage value of the DC/DC converter is greater than or equal to a first voltage value, to thereby charge the second power supply,
controls the DC/DC converter during a predetermined discharge period after the charge period so that the output voltage value of the DC/DC converter is a second voltage value which is less than the first voltage value, to thereby discharge the second power supply, and
determines deterioration of the second power supply according to a time period in which the voltage value of the second power supply decreases to a third voltage value which is less than the first voltage value and greater than or equal to the second voltage value.

3. The power supply control device according to Claims 1 or 2, wherein:
the power supply control device has an emergency power supply and an emergency switch which enables power supply from the emergency power supply to the controller; and
the controller determines deterioration of the second power supply when the emergency switch is in an on state.

4. The power supply control device according to Claim 3, wherein when the emergency switch is in the on state, the cantroller controls the DC/DC converter to charge the second power supply.

5. A vehicle having the power supply control device according to Claim 4, wherein when, as a result of the deterioration determination of the second power supply, it is determined that the second power supply has not reached the end of its battery life, the controller permits the vehicle to run.
